# EUROPÄISCHE PATENTSCHRIFT

(11) **EP 2 751 077 B1**
(45) Veröffentlichungstag und Bekanntmachung des Hinweises auf die Patenterteilung: **02.03.2016**
(21) Anmeldenummer: 12753124.2
(22) Anmeldetag: 30.08.2012
(51) Int. Cl.: C07D 211/10, C07F 3/00

(54) **VERFAHREN ZUR HERSTELLUNG VON AMIDOZINKHALOGENID/ALKALIMETALLHALOGENID VERBINDUNGEN**
METHOD FOR PRODUCING AMIDO-ZINC HALIDE/ALKALI-METAL HALIDE COMPOUNDS
PROCÉDÉ DE PRÉPARATION DE COMPOSÉS À BASE D'HALOGÉNURE D'AMIDOZINC / HALOGÉNURE DE MÉTAL ALCALIN

(30) Priorität: 02.09.2011 DE 102011082055
(43) Veröffentlichungstag der Anmeldung: 09.07.2014
(73) Patentinhaber: Rockwood Lithium GmbH, 65926 Frankfurt/M (DE)
(72) Erfinder: WIETELMANN, Ulrich, 61381 Friedrichsdorf (DE); RITTMEYER, Peter, 65843 Sulzbach/Taunus (DE); LISCHKA, Uwe, 60437 Frankfurt am Main (DE); MURSO, Alexander, 38704 Liebenburg (DE); KIEFER, Florian, 38640 Goslar (DE)
(74) Vertreter: Rottmayer, Hans
(86) Internationale Anmeldenummer: PCT/EP2012/066863
(87) Internationale Veröffentlichungsnummer: WO 2013/030278

(56) Entgegenhaltungen:
- WO-A1-2010/092096
- FERNANDO,E. VALERA ET AL: "Der Fluss ist das Ding ... oder ist er es? Ein Vergleich homogener Reaktionen in Reaktionskolben und Durchflussreaktoren", ANGEWANDTE CHEMIE (INTERNATIONAL ED. IN ENGLISH), Bd. 122, Nr. 14, 29. März 2010 (2010-03-29), Seiten 2530-2537, XP55039659, ISSN: 0044-8249, DOI: 10.1002/ange.200906095

## Beschreibung

Die vorliegende Erfindung betrifft ein Verfahren zur Herstellung von Amidozinkhalogeniden als Adukt mit Alikalimetallhalogeniden (R¹R²N-ZnY*LiY in aprotischen organischen Lösungsmitteln.

Aryl- und Heteroaryl-Metallverbindungen werden entweder durch eine Halogen-Metallaustauschreaktion (z. B. Brom-Lithiumaustausch) Insertion von elementarem Metall in eine Kohlenstoff-Halogenbindung z. B. Zinkinsertion in eine Kohlenstoff-lodbindung oder durch Metallierung (Deprotonierung mit Hilfe starker Basen) hergestellt.

Nachteilig an den Aryl- oder Heteroaryl-lodverbindungen ist jedoch deren Preis und geringe Haltbarkeit. Weiterhin müssen bei den Austauschreaktionen und Insertionen, durch die Bildung von Metallsalzen, diese zum Teil gesondert entsorgt werden.

Die regioselektive Funktionalisierung verschiedenster Arene und Heteroarene wird durch Deprotonierung von Arenen ermöglicht und stellt eine der nützlichsten Umwandlungen in der organischen Synthese da. Hierzu werden häufig lithiumorganische Verbindungen verwendet. Zur Unterdrückung von Nebenreaktionen muss allerdings im Allgemeinen bei sehr tiefen Temperaturen gearbeitet werden. Weiterhin weisen einige lithiumorganischen Verbindungen, wie LiTMP (TMP = 2,2,6,6-Tetramethylpiperidin) eine geringe Stabilität auf und werden deshalb in situ dargestellt.

Zwar weisen magnesiumorganische Verbindungen wie TMPMgCl*LiCl eine höhere Stabilität auf, jedoch ist die Toleranz gegenüber sensiblen funktionellen Gruppen, wie z. B. Aldehyden und Nitrogruppen, eingeschränkt.

Aus der Literatur ist weiterhin Lithium-di-tert.-butyl-(2,2,6,6-tetramethylpiperidino)zinkat (Li*t*-Bu₂TMPZn) als Reagenz zur Metallierung von Aromaten bekannt, dessen hohe Aktivität auf einer Zinkatspezies beruht (Miller, R. A.; Smith, M. R.; Marcune, B. J. Org. Chem. 2005, 70, 9074). Jedoch können auch hier z.B. keine Aldehydfunktionen toleriert werden.

Das Dokument DE 102010007833 A1 beschreibt die Herstellung von Amidozinkhalogeniden als Adukte mit Alikalimetallhalogeniden wie TMP-ZnCl*LiCl-Lösung in Tetrahydrofuran (THF):
▪ Umsetzung von TMPH (2,2,6,6-Tetramethylpiperidin) mit n-Butyllithium (2,4 M in Hexan) in Hexan bei -40°C
▪ Umsetzung der erhaltenen Reaktionslösung bei -10°C mit einer 1 M Lösung von ZnCl₂ in THF, aufwärmen auf 25°C
▪ Abdestillieren des THF/Hexan-Lösungsmittelgemisches im Vakuum
▪ Lösen des erhaltenen Feststoffes in reinem THF

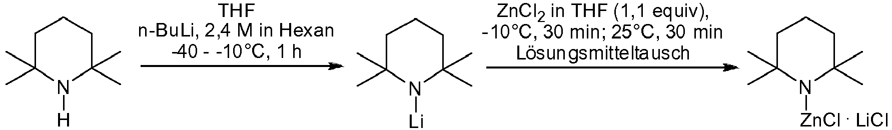

Nachteilig an dem bekannten Verfahren ist:
▪ die Notwendigkeit bei tiefen Temperaturen zu arbeiten, sowie
▪ ein Lösungsmittelwechsel als zusätzlicher Verfahrensschritt.

Beim Lösungsmitteltausch erhält man ein THF/Hexan-Gemisch, welches entweder aufwendig durch Destillation getrennt oder entsorgt werden muss.

Aufgabe der vorliegenden Erfindung ist es, ein Verfahren zur Herstellung von Amidozinkhalogenid / Alkalimetallhalogenid zur Verfügung zu stellen, das die

Nachteile des Standes der Technik überwindet und ein einfaches und wirtschaftliches Verfahren zur Herstellung dieser Verbindungsklasse anzugeben. Erfindungsgemäß wird die Aufgabe durch ein Verfahren zur Herstellung von

R¹R²N-ZnY*LiY (I)

gelöst, worin ist
R¹, R² unabhängig ausgewählt aus H, substituiertem oder unsubstituiertem Aryl oder Heteroaryl mit ein oder mehr Heteroatomen, geradem, verzweigtem oder zyklischem substituiertem oder unsubstituiertem Alkyl, Alkenyl, Alkinyl oder deren Silylderivaten; wobei R¹ und R² zusammen Teil einer zyklischen oder polymeren Struktur sein können, worin mindestens einer der Reste R¹ und R² nicht H ist;
Y ausgewählt aus der Gruppe mit F; Cl; Br; I; CN; SCN; NCO; HalO_{z}, wobei z gleich 3 oder 4 ist und Hal ausgewählt ist aus Cl, Br und I; NO₃; BF₄; PF₆; H; einem Carboxylat der allgemeinen Formel R^{x}CO₂; einem Alkoholat der allgemeinen Formel OR^{x}; einem Thiolat der allgemeinen Formel SR^{x}; R^{x}P(O)O₂; oder SCOR^{x}; oder SCSR^{x}; OₘSR^{x}, wobei m gleich 2 oder 3; oder NOₙ, wobei n gleich 2 oder 3; und deren Derivaten; wobei R^{x} ein substituiertes oder unsubstituiertes Aryl ist oder Heteroaryl mit ein oder mehr Heteroatomen, gerades, verzweigtes oder zyklisches substituiertes oder unsubstituiertes Alkyl, Alkenyl, Alkinyl oder deren Derivate oder H ist, bei dem
ein primäres oder sekundäres Amin in einem aprotischen organischen Lösungsmitteln gelöst vorgelegt,
a) worin das Amin wird im Konzentrationsbereich von 10 bis 90 Gew.-% gelöst vorgelegt und
b) eine ZnY₂-Lösung in einem aprotischen organischen Lösungsmitteln und R^{x}Li werden simultan zudosiert,
   wobei gilt, dass zunächst mit der Dosierung des R^{x}Li begonnen wird und erst nach Zugabe von 5 - 10 mol% R^{x}Li mit der Dosierung der ZnY₂-Lösung begonnen wird und
   dass R^{x}Li und die ZnY₂-Lösung während der Dosierphase an unterschiedlichen Stellen der Reaktionslösung eindosiert werden.

Dabei sollen die Lithiumbase und die ZnY₂-Lösung nicht direkt miteinander in Kontakt kommen.

Beide Verfahren liefern auch bei Reaktionstemperaturen >0°C das Amidozinkhalogenid / Alkalimetallhalogenid in guten Ausbeuten.

Durch die "quasi-Simultandosierung" wird sichergestellt, dass zunächst gebildetes TMP-Li schnell ummetalliert wird und keine Zeit hat, das Lösungsmittel THF anzugreifen. Das zeitversetzte Dosieren stellt sicher, dass eindosiertes n-BuLi mit dem Amin reagiert.

Das erfindungsgemäße Verfahren wird vorzugsweise kontinuierlich in einem Mikro- oder Mesodurchflussreaktor durchgeführt.

Vorzugsweise wird das R^{x}Li als Konzentrat (>90 Gew.-%) in einem aprotischen organischen Lösungsmittel eingesetzt. Durch die Verwendung von n-BuLi-Konzentrat werden nur geringe Mengen eines zweiten Lösungsmittels in die Produktlösung eingebracht.

Weiterhin sind die Reste Y unabhängig voneinander oder beide Cl, Br oder I und vorzugsweise Cl. Besonders bevorzugt ist als Lithium-Base *n*-Butyl-Li. Weiterhin wird bevorzugt das Lösungsmittel ausgewählt aus zyklischen, geraden oder verzweigten Mono- oder Polyethern, Thioethern, Aminen, Phosphinen und deren Derivaten, die ein oder mehr weitere Heteroatome enthalten, ausgewählt aus O, N, S und P, vorzugsweise Tetrahydrofuran (THF), 2-Methyltetrahydrofuran, Dibutylether, Diethylether, tert.-Butylmethylether, Dimethoxyethan, Dioxanen, vorzugsweise 1,4-Dioxan, Triethylamin, Ethyldiisopropylamin, Dimethylsulfid, Dibutylsulfid; zyklischen Amiden, vorzugsweise N-Methyl-2-pyrrolidon (NMP), N-Ethyl-2-pyrrolidon (NEP), N-Butyl-2-pyrrolidon (NBP); zyklischen, geraden oder verzweigten Alkanen und/oder Alkenen, wobei ein oder mehr Wasserstoffatome durch ein Halogenatom ersetzt sind, vorzugsweise Dichlormethan, 1,2-Dichlorethan, CCl₄; Harnstoffderivaten, vorzugsweise N,N'-Dimethylpropylenharnstoff (DMPU); aromatischen, heteroaromatischen oder aliphatischen Kohlenwasserstoffen, vorzugsweise Benzol, Toluol, Xylol, Pyridin, Pentan, Cyclohexan, Hexan, Heptan; Hexamethylphosphortriamid (HMPA), CS₂, oder deren Kombinationen. Die nach diesem Verfahren hergestellten Verbindungen werden in der Synthesechemie als selektive Basen bei der Deprotonierung von funktionalisierten Aromaten und Heteroaromaten eingesetzt. Im Vergleich mit Lithium- und Magnesiumamiden können bei Einsatz von Amidozinkhalogenid / Alkalimetallhalogenid-Basen deutlich höhere Selektivitäten und Ausbeuten erzielt werden. Es können Deprotonierungen an Systemen durchgeführt werden die extrem sensitive funktionelle Gruppen wie Aldehyd- oder Nitro-Gruppen enthalten. Ebenfalls können sensible Heteroaromaten wie z.B. Diazine selektiv in hohen Ausbeuten deprotoniert werden. Die Verwendung dieser Basen erlaubt außerdem Synthesen unter nicht kryogenen Bedingungen.

Der Gegenstand der Erfindung wird anhand des folgenden Beispiels 3 näher erläutert. Beispiele 1 und 2 sind als Referenzbeispiele anzusehen.

### Beispiel 1

In einem 500ml-Doppelmantelreaktor werden 95,4 g THF und 14,61 g(103 mmol) 2,2,6,6,-Tetramethylpiperidin vorgelegt. Die Temperatur wird auf 20°C eingestellt. Innerhalb von 30 Minuten werden 6,82 g n-Butyllithium-Konzentrat (95,5%, 99 mmol) über eine Dosierpumpe zudosiert. Dabei wird die Manteltemperatur des Reaktors so geregelt, dass die Innentemperatur konstant bei 20°C bleibt. Anschließend wird noch 10 Minuten bei 20°C gerührt. Danach werden 14,14 g (104 mmol) festes Zinkchlorid in zwei Portionen zugegeben. Aufgrund der stark exothermen Reaktion steigt die Reaktionstemperatur kurzfristig auf 30°C an. Nach der zweiten ZnCl₂-Zugabe wird noch 20 Minuten bei 20°C gerührt.

Die trübe Produktlösung wird über einen Filter klar filtriert.

| | |
|---|---|
| Auswaage: | 128,6 g |
| Aktivbase: | 0,62 mmol/g TMP-ZnCl*LiCl |
| Ausbeute: | 80,5% (bezogen auf eingesetztes n-Butyllithium |

### Beispiel 2

Der Versuch aus Beispiel 1 wird wiederholt, die Reaktionstemperatur beträgt jedoch 0°C.

| | |
|---|---|
| Ausbeute: | 87,2% |

### Beispiel 3

In einem 2l-Doppelmantelreaktor werden 140 g (99,1 mmol) 2,2,6,6,-Tetramethylpiperidin gelöst in 400g THF vorgelegt. Die Temperatur wird auf 0°C eingestellt. Insgesamt werden 64,03 g n-Butyllithium-Konzentrat (94,4%, 941 mmol) innerhalb von 70 Minuten über eine Dosierpumpe zudosiert. 15 Minuten nach Beginn der Dosierung von n-Butyllithium beginnt man mit der Dosierung von 847,9 g einer 1,17 molaren Lösung von Zinkchlorid in THF (992 mmol). Die Dosiergeschwindigkeiten von n-Butyllithium und der ZnCl₂-Lösung werden so eingestellt, dass immer ein Überschuss von bereits gebildetem 2,2,6,6,-Tetramethylpiperidin-Li vorliegt. Die Einleitstellen n-Butyllithium und der Lösung von Zinkchlorid in THF sind so angeordnet, dass sie nicht direkt nebeneinander liegen. Die Reaktionstemperatur schwankt trotz Kühlung zwischen 0 und 15°C. Nach beendeter Dosierung der beiden Reaktanden wird das Reaktionsgemisch auf Raumtemperatur erwärmt und noch 30 Minuten gerührt.

Die leicht trübe Produktlösung wird über einen Filter klar filtriert.

| | |
|---|---|
| Auswaage: | 1451,2 g |
| Aktivbase: | 0,54 mmol/g TMP-ZnCl*LiCl |
| Ausbeute: | 83,2% (bezogen auf eingesetztes n-Butyllithium) |

## Patentansprüche

1. Verfahren zur Herstellung von
R¹R²N-ZnY*LiY (I)
worin ist
R¹, R² unabhängig ausgewählt aus H, substituiertem oder unsubstituiertem Aryl oder Heteroaryl mit ein oder mehr Heteroatomen, geradem, verzweigtem oder zyklischem substituiertem oder unsubstituiertem Alkyl, Alkenyl, Alkinyl oder deren Silylderivaten; wobei R¹ und R² zusammen Teil einer zyklischen oder polymeren Struktur sein können, worin mindestens einer der Reste R¹ und R² nicht H ist;
Y ausgewählt aus der Gruppe mit F; Cl; Br; I; CN; SCN; NCO; HalO_{z}, wobei z gleich 3 oder 4 ist und Hal ausgewählt ist aus Cl, Br und I; NO₃; BF₄; PF₆; H; einem Carboxylat der allgemeinen Formel R^{x}CO₂; einem Alkoholat der allgemeinen Formel OR^{x}; einem Thiolat der allgemeinen Formel SR^{x}; R^{x}P(O)O₂; oder SCOR^{x}; oder SCSR^{x}; OₘSR^{x}, wobei m gleich 2 oder 3; oder NOₙ, wobei n gleich 2 oder 3; und deren Derivaten; wobei R^{x} ein substituiertes oder unsubstituiertes Aryl ist oder Heteroaryl mit ein oder mehr Heteroatomen, gerades, verzweigtes oder zyklisches substituiertes oder unsubstituiertes Alkyl, Alkenyl, Alkinyl oder deren Derivate oder H ist, **dadurch gekennzeichnet, dass**
ein primäres oder sekundäres Amin in einem aprotischen organischen Lösungsmitteln gelöst vorgelegt,
a) wobei das Amin wird im Konzentrationsbereich von 10 bis 90 Gew.-% gelöst vorgelegt und
b) ZnY₂-Lösung in einem aprotischen organischen Lösungsmitteln und R^{x}Li simultan zudosiert werden,
wobei zu beachten ist, dass zunächst mit der Dosierung des R^{x}Li begonnen wird und erst nach Zugabe von 5 - 10 mol% R^{x}Li mit der Dosierung der ZnY₂-Lösung begonnen wird und
dass R^{x}Li und die ZnY₂-Lösung während der Dosierphase an unterschiedlichen Stellen der Reaktionslösung eindosiert werden.

2. Verfahren nach Anspruch 1, **dadurch gekennzeichnet, dass** die Umsetzung kontinuierlich in einem Mikro- oder Mesodurchflussreaktor durchgeführt wird.

3. Verfahren nach Anspruch 1 oder 2, **dadurch gekennzeichnet, dass** das R^{x}Li als Konzentrat > 95 Gew.-% in einem aprotischen organischen Lösungsmittel eingesetzt wird.

4. Verfahren nach Anspruch 1, **dadurch gekennzeichnet, dass** Y unabhängig oder beide Cl, Br oder I und vorzugsweise Cl sind.

5. Verfahren nach Anspruch 1, **dadurch gekennzeichnet, dass** die Lithium-Base *n*-Butyl-Li ist.

6. Verfahren nach einem der Ansprüche 1 bis 5, **dadurch gekennzeichnet, dass** das Lösungsmittel ausgewählt ist aus zyklischen, geraden oder verzweigten Mono- oder Polyethern, Thioethern, Aminen, Phosphinen und deren Derivaten, die ein oder mehr weitere Heteroatome enthalten, ausgewählt aus O, N, S und P, vorzugsweise Tetrahydrofuran, 2-Methyltetrahydrofuran, Dibutylether, Diethylether, tert.-Butylmethylether, Dimethoxyethan, Dioxanen, vorzugsweise 1,4-Dioxan, Triethylamin, Ethyldiisopropylamin, Dimethylsulfid, Dibutylsulfid; zyklischen Amiden, vorzugsweise N-Methyl-2-pyrrolidon, N-Ethyl-2-pyrrolidon, N-Butyl-2-pyrrolidon; zyklischen, geraden oder verzweigten Alkanen und/oder Alkenen, wobei ein oder mehr Wasserstoffatome durch ein Halogenatom ersetzt sind, vorzugsweise Dichlormethan, 1,2-Dichlorethan, CCl₄; Harnstoffderivaten, vorzugsweise N,N'-Dimethylpropylenharnstoff; aromatischen, heteroaromatischen oder aliphatischen Kohlenwasserstoffen, vorzugsweise Benzol, Toluol, Xylol, Pyridin, Pentan, Cyclohexan, Hexan, Heptan; Hexamethylphosphortriamid, CS₂, oder deren Kombinationen.

## Claims

1. A method for producing
R¹R²N-ZnY*LiY (I)
wherein
R¹, R² are independently selected from H, substituted or unsubstituted aryl or heteroaryl having one or more heteroatoms, linear, branched or cyclic substituted or unsubstituted alkyl, alkenyl, alkynyl or their silyl derivatives; wherein R¹ and R² together can be part of a cyclic or polymeric structure, wherein at least one of the radicals R¹ and R² is not H;
Y is selected from the group with F; Cl; Br; I; CN; SCN; NCO; HalO_{z}, where z is equal to 3 or 4 and Hal is selected from Cl, Br and I; NO₃; BF₄; PF₆; H; a carboxylate of the general formula R^{x}CO₂; an alcoholate of the general formula OR^{x}; a thiolate of the general formula SR^{x}; R^{x}P(O)O₂; or SCOR^{x}; or SCSR^{x}; OₘSR^{x}, where m is equal to 2 or 3; or NOₙ, where n is equal to 2 or 3; and their derivatives; wherein R^{x} is a substituted or unsubstituted aryl or is heteroaryl having one or more heteroatoms, linear, branched or cyclic substituted or unsubstituted alkyl, alkenyl, alkynyl or their derivatives or H,
**characterised in that**
a primary or secondary amine is presented dissolved in an aprotic organic solvent,
a) wherein the amine is presented dissolved in the concentration range of 10 to 90% by weight, and
b) ZnY₂ solution in an aprotic organic solvent and R^{x}Li are simultaneously added in a metered manner,
wherein it is to be heeded that the metering of the R^{x}Li is started first and only after 5 - 10 mol% R^{x}Li has been added is the metering of the ZnY₂ solution started, and
R^{x}Li and the ZnY₂ solution are metered in at different locations in the reaction solution during the metering phase.

2. A method according to claim 1, **characterised in that** the reaction is carried out continuously in a micro- or meso-flow reactor.

3. A method according to claim 1 or 2, **characterised in that** the R^{x}Li is used as a concentrate > 95% by weight in an aprotic organic solvent.

4. A method according to claim 1, **characterised in that** Y are independent or both Cl, Br or I and preferably Cl.

5. A method according to claim 1, **characterised in that** the lithium base is *n*-butyl-Li.

6. A method according to one of claims 1 to 5, **characterised in that** the solvent is selected from cyclic, linear or branched mono- or polyethers, thioethers, amines, phosphines and their derivatives that contain one or more further heteroatoms, selected from O, N, S and P, preferably tetrahydrofuran, 2-methyltetrahydrofuran, dibutyl ether, diethyl ether, tert.-butyl methyl ether, dimethoxyethane, dioxanes, preferably 1,4-dioxane, triethylamine, ethyldiisopropylamine, dimethyl sulphide, dibutyl sulphide; cyclic amides, preferably N-methyl-2-pyrrolidone, N-ethyl-2-pyrrolidone, N-butyl-2-pyrrolidone; cyclic, linear or branched alkanes and/or alkenes, wherein one or more hydrogen atoms is/are replaced by a halogen atom, preferably dichloromethane, 1,2-dichloroethane, CCl₄; urea derivatives, preferably N,N'-dimethyl propylene urea; aromatic, heteroaromatic or aliphatic hydrocarbons, preferably benzene, toluene, xylene, pyridine, pentane, cyclohexane, hexane, heptane; hexamethylphosphoric triamide, CS₂, or their combinations.

## Revendications

1. Procédé de préparation d'un composé de formule
R¹R²N-Zn Y*LiY (I)
dans laquelle
- R¹ et R² représentent chacun, indépendamment, une entité choisie parmi un atome d'hydrogène, un groupe aryle ou hétéroaryle comportant un ou plusieurs hétéroatome(s), avec ou sans substituant(s), et un groupe alkyle, alcényle ou alcynyle, linéaire, ramifié ou cyclique, avec ou sans substituant(s), et leurs dérivés de type silyle, ou bien R¹ et R² représentent des entités qui constituent conjointement une partie d'une structure cyclique ou polymère, étant entendu qu'au moins l'une des entités représentées par R¹ et R² n'est pas un atome d'hydrogène ;
- et Y représente une entité choisie dans l'ensemble formé par celles symbolisées par F, Cl, Br, I, CN, SCN, NCO, HalO_{z} où l'indice z vaut 3 ou 4 et Hal représente un atome de chlore, de brome ou d'iode, NO₃, BF₄, PF₆ ou H, les entités carboxylate, de formule générale R^{x}CO₂, alcoolate, de formule générale OR^{x}, thiolate, de formule générale SR^{x}, et celles symbolisées par R^{x}P(O)O₂, SCOR^{x}, SCSR^{x}, OₘSR^{x} où l'indice m vaut 2 ou 3, ou NOₙ où l'indice n vaut 2 ou 3, ainsi que leurs dérivés, étant entendu que R^{x} représente un groupe aryle ou hétéroaryle comportant un ou plusieurs hétéroatome(s), avec ou sans substituant(s), un groupe alkyle, alcényle ou alcynyle, linéaire, ramifié ou cyclique, avec ou sans substituant(s), un dérivé de l'un de ces groupes ou un atome d'hydrogène ;
**caractérisé en ce que**
a) l'on prépare une solution d'une amine primaire ou secondaire dans un solvant organique aprotique, dans laquelle solution l'amine se trouve dissoute en une concentration de 10 à 90 % en poids,
b) et l'on y ajoute simultanément un composé de formule ZnY₂, en solution dans un solvant organique aprotique, et une base au lithium de formule R^{x}Li, en faisant bien attention
à commencer d'abord par ajouter la base R^{x}Li, et à ne faire débuter l'addition du composé ZnY₂ qu'après avoir ajouté 5 à 10 % en moles de la base R^{x}Li,
et à faire en sorte, pendant cette opération d'addition, d'ajouter la base R^{x}Li et la solution du composé ZnY₂ en des points différents de la solution réactionnelle.

2. Procédé conforme à la revendication 1, **caractérisé en ce que** la réaction est effectuée en mode continu dans un microréacteur ou mésoréacteur à circulation.

3. Procédé conforme à la revendication 1 ou 2, **caractérisé en ce que** la base R^{x}Li est utilisée sous forme de concentré, à plus de 95 % en poids, dans un solvant organique aprotique.

4. Procédé conforme à la revendication 1, **caractérisé en ce que** les symboles Y représentent, indépendamment ou tous les deux, des atomes de chlore, de brome ou d'iode, et de préférence des atomes de chlore.

5. Procédé conforme à la revendication 1, **caractérisé en ce que** la base au lithium est du n-butyl-lithium.

6. Procédé conforme à l'une des revendications 1 à 5, **caractérisé en ce que** le solvant est choisi parmi les monoéthers, polyéthers, thioéthers, amines et phosphines, cycliques, linéaires ou ramifié(e)s, et leurs dérivés qui comportent un ou plusieurs autre(s) hétéroatome(s) choisi(s) parmi les atomes d'oxygène, d'azote, de soufre ou de phosphore, de préférence parmi les suivants : tétrahydrofurane, 2-méthyl-tétrahydrofurane, dibutyl-éther, diéthyl-éther, tertiobutyl-méthyl-éther, diméthoxy-éthane, dioxanes, de préférence 1,4-dioxane, triéthyl-amine, éthyl-diisopropyl-amine, diméthyl-sulfure, dibutylsulfure ; les amides cycliques, de préférence N-méthyl-pyrrolidine-2-one, N-éthyl-pyrrolidine-2-one et N-butyl-pyrrolidine-2-one ; les alcanes et/ou alcènes cycliques, linéaires ou ramifiés, dont un ou plusieurs atome(s) d'hydrogène est ou sont remplacé(s) par un ou des atome(s) d'halogène, de préférence dichlorométhane, 1,2-dichloro-éthane, tétrachlorométhane ; les dérivés de l'urée, de préférence N,N'-diméthyl-propylène-urée ; les hydrocarbures aromatiques, hétéroaromatiques ou aliphatiques, de préférence benzène, toluène, xylène, pyridine, pentane, cyclohexane, hexane, heptane ; et l'hexaméthyl-phosphotriamide et le disulfure de carbone ; ainsi que leurs combinaisons.
